# EUROPEAN PATENT APPLICATION

(11) **EP 4 354 202 A1**
(43) Date of publication of application: **17.04.2024**
(21) Application number: 22876929.5
(22) Date of filing: 30.09.2022
(51) Int. Cl.: G02B 27/01, G02B 27/42, G02B 6/00, G02B 5/32

(54) **WAVEGUIDE DISPLAY DEVICE**

(30) Priority: 30.09.2021 KR 20210129963
(71) Applicant: LG Chem, Ltd., Yeongdeungpo-gu Seoul 07336 (KR)
(72) Inventor: KIM, Jae Jin, Daejeon 34122 (KR); JUNG, Bo Ra, Daejeon 34122 (KR); HWANG, Hye Won, Daejeon 34122 (KR); YOO, Yeon Jae, Daejeon 34122 (KR); LEE, Joon Young, Daejeon 34122 (KR); SHIN, Bu Gon, Daejeon 34122 (KR); SONG, Min Soo, Daejeon 34122 (KR)
(74) Representative: Hoffmann Eitle
(86) International application number: PCT/KR2022/014720
(87) International publication number: WO 2023/055157

(57) **Abstract**

The present disclosure provides a waveguide display apparatus. The waveguide display apparatus of the present disclosure is a waveguide display apparatus for correcting curved surface reflection distortion, the waveguide display apparatus including a waveguide for guiding light inputted from the outside; a first diffractive optical element disposed at the waveguide, and diffracting the light inputted from the outside to the inside of the waveguide; and a second diffractive optical element disposed at the waveguide, and diffracting the light guided by the waveguide to output a plurality of diffracted lights toward a direction of a curved surface reflector located outside, wherein the second diffractive optical element has a structure of a diffraction grating corresponding to a curvature of the curved surface reflector such that the diffracted lights are reflected at different locations of the curved surface reflector in directions parallel to each other.

## Description

### [Technical Field]

The present disclosure claims the benefit of the filing date of Korean Patent Application No. 10-2021-0129963 filed to the Korean Intellectual Property Office on September 30, 2021, the contents of which are hereby incorporated by reference in their entirety.

The present disclosure relates to a waveguide display apparatus. Specifically, the present disclosure relates to a waveguide display apparatus for correcting curved surface reflection distortion.

### [Background Art]

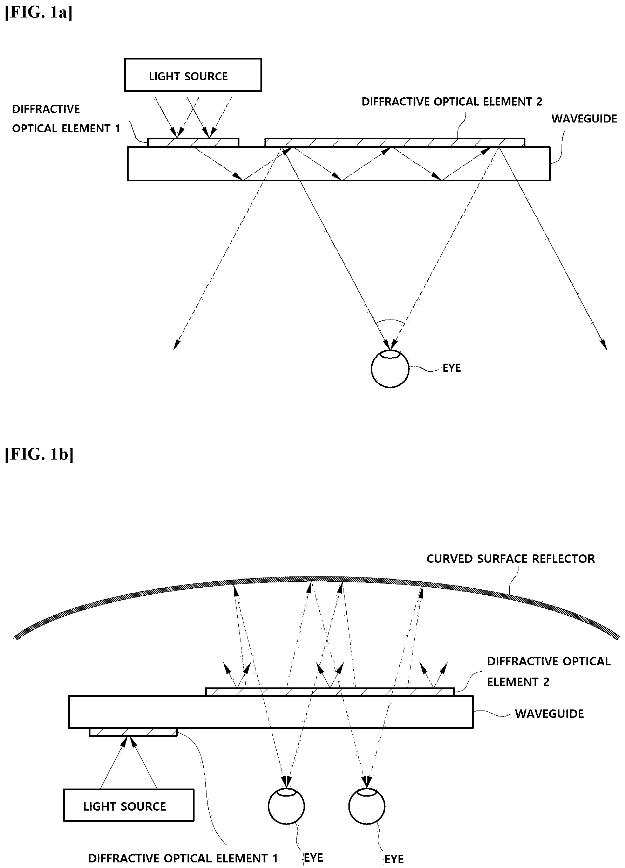

FIG. 1a shows an example of a conventional waveguide display.

In the conventional waveguide display, light incident into the optical waveguide through the diffraction optical element 1 travels in the direction of the diffraction optical element 2 through internal reflection. The light which has traveled through internal reflection is emitted from the diffraction optical element 2 and is recognized by the observer's eyes. The light emitted from the diffraction optical element 2 has the same angle as the incident angle, and for this purpose, the diffraction gratings of the diffraction optical element 1 and the diffraction optical element 2 are symmetrical to each other.

As shown in FIG. 1b, when a conventional waveguide display is applied to a head-up display, the light (image) emitted through the diffraction optical element 2 is reflected on a curved body (curved surface reflector) such as a windshield for a vehicle, and the observer can recognize the image reflected from the curved surface reflector with his/her eyes.

However, when the image emitted through the diffraction optical element 2 is reflected by the curved surface reflector, the image is distorted due to the curved surface reflection distortion in the curved surface reflector, which results in a problem that causes an observer not to recognize a clear image.

For example, due to the distortion of the curved surface reflection, the image emitted through the diffraction optical element 2 is incident on the observer's eye at an angle different from the angle of the image inputted to the diffraction optical element 1. Additionally, since the image emitted through the diffraction optical element 2 is reflected from the curved surface reflector at different angles according to the location on the curved surface reflector from which the image is reflected, the observer observes the outputted (reflected) image at different angles according to the observation location.

In connection with the principle of waveguide display, the distortion of the curved surface reflection occurs in different forms according to the observation view point and location of an observer, so the above-described problem cannot be solved by simply correcting the image inputted to the diffraction optical element 1.

### [Summary of Invention]

### [Technical Problem]

An object of the present disclosure is to provide a waveguide display apparatus capable of correcting curved surface reflection distortion.

However, the objects to be addressed by the present disclosure are not limited to the above-mentioned problems, and problems other than mentioned above will be clearly appreciated by those skilled in the art from the following description.

### [Solution to Problem]

According to an aspect of the present disclosure, there is provided a waveguide display apparatus for correcting curved surface reflection distortion, the waveguide display apparatus including: a waveguide for guiding light inputted from the outside; a first diffractive optical element disposed at the waveguide, and diffracting the light inputted from the outside to the inside of the waveguide; and a second diffractive optical element disposed at the waveguide, and diffracting the light guided by the waveguide to output a plurality of diffracted lights toward a direction of a curved surface reflector located outside, wherein the second diffractive optical element has a structure of a diffraction grating corresponding to a curvature of the curved surface reflector such that the diffracted lights are reflected at different locations of the curved surface reflector in directions parallel to each other.

### [Advantageous Effects]

The waveguide display apparatus according to an embodiment of the present disclosure has an effect of correcting the curved surface reflection distortion, thereby providing a clearer image.

Effects of the present disclosure are not limited to the above-described effects, but effects other than described above will be clearly appreciated by those skilled in the art from the present specification and accompanying drawings.

### [Brief Description of Drawings]

FIG. 1a shows a diagram for explaining an example of a conventional waveguide display.
FIG. 1b shows a diagram for explaining an example of a case in which a conventional waveguide display provides an image through a curved surface reflection.
FIG. 2 shows a diagram for explaining the configuration of a waveguide display apparatus according to the present disclosure.
FIG. 3 shows diagrams for explaining examples of a recording method of diffraction elements according to the present disclosure.
FIG. 4 shows diagrams for explaining and comparing the sharpnesses of images between the conventional waveguide display and the waveguide display apparatus according to the present disclosure.

### [Reference Sign List]

200: Waveguide display apparatus
210: Waveguide
220: First diffractive optical element
230: Second diffractive optical element

### [Description of Embodiments]

When a part "comprises" or "includes" a component, it means not that the part excludes other component, but instead that the part may further include other component unless expressly stated to the contrary.

Throughout the specification, when a member is described as being located "on" another member, this includes not only a case in which the member is in contact with the other member but also a case in which another member exists between the two members.

Throughout this specification, the phrase "A and/or B" refers to "A and B, or A or B."

The present disclosure is a waveguide display apparatus 200 which corrects curved surface reflection distortion. The waveguide display apparatus 200 according to the present disclosure may be utilized in a vehicle HUD system which causes an image to be recognized by an observer or a user through reflection from a windshield. Additionally, the waveguide display apparatus 200 according to the present disclosure may be utilized not only in a vehicle HUD system but also in various applications which cause an image to be recognized through reflection from a curved body.

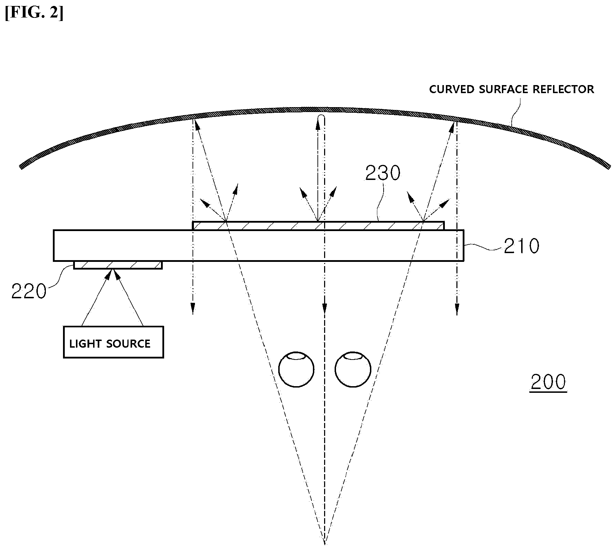

The configuration of the waveguide display apparatus 200 according to the present disclosure is shown in FIG. 2. As shown in FIG. 2, the waveguide display apparatus 200 may be configured by including a waveguide 210, a first diffractive optical element 220 disposed at the waveguide 210, and a second diffractive optical element 230 disposed at the waveguide 210.

The waveguide 210 may perform a function of guiding light inputted from the outside (light source) through internal reflection. The waveguide 210 may be provided with a reflection surface therein for internal reflection.

According to an embodiment, the waveguide 210 may be formed of a flat plate. When the waveguide itself is formed with the curvature, a problem arises in that all of the angle and wavelength of light inputted to the waveguide, the change in the curvature of the waveguide, the curvature of the curvature reflector, and the like must be considered in order to reduce the curved surface reflection distortion of the light outputted from the waveguide to the outside. On the other hand, in the present disclosure, since the upper and lower surfaces of the waveguide 210 are formed in a flat plate shape and the angle of light outputted from the waveguide 210 to the outside is uniform, there is an advantage in that only an angle corresponding to the curvature of the curved surface reflector may be considered.

The light inputted from the light source may be a specific image, and in this case, the light source may be a liquid crystal display (LCD) panel, a digital micromirror device (DMD), an organic light emitting diode (OLED) panel, or the like. Hereinafter, light inputted from the light source will be referred to as an 'input image'.

The first diffractive optical element 220 may diffract the light inputted from the light source, that is, the input image, to the inside (internal side) of the waveguide 210. The first diffractive optical element 220 has a diffraction grating structure, and can diffract the input image into the inside of the waveguide 210 through a diffraction phenomenon by the diffraction grating structure.

According to an embodiment, the first diffractive optical element 220 may be implemented as a holographic optical element. When the first diffractive optical element 220 is implemented as the holographic optical element, it is possible to implement high diffraction efficiency and narrowband frequency characteristics.

The input image diffracted into the waveguide 210 by the first diffractive optical element 220 may travel toward the second diffractive optical element 230 by internal reflection. That is, the input image diffracted into the inside may be guided in the direction of the second diffractive optical element 230 through the inside of the waveguide 210 by internal reflection.

The second diffractive optical element 230 may diffract the guided input image and output the diffracted lights to the outside. The second diffractive optical element 230 also has a diffraction grating structure, and may output diffracted lights to the outside through a diffraction phenomenon by the diffraction grating structure.

According to an embodiment, the second diffractive optical element 230 may be implemented as a holographic optical element. When the second diffractive optical element 230 is implemented as the holographic optical element, it is possible to implement high diffraction efficiency and narrowband frequency characteristics.

The first diffractive optical element 220 may be disposed on one of the surfaces of the waveguide 210 in the direction in which the light source is located. The second diffractive optical element 230 may be disposed on one of the surfaces of the waveguide 210 in the direction in which the curved surface reflector is located. Accordingly, the first diffractive optical element 220 and the second diffractive optical element 230 may be disposed on the same surface or different surfaces depending on the locations of the light source and the curved surface reflector.

The plurality of diffracted lights may be outputted from various locations on the second diffractive optical element 230 toward the direction of the curved surface reflector located outside. The diffracted lights may be reflected from different locations on the curved surface reflector.

According to an embodiment, the curved surface reflector may be located outside the waveguide 210 while being spaced apart from it. That is, the curved surface reflector is formed separately from the waveguide display apparatus of the present disclosure including the waveguide 210, the first diffractive optical element 220, and the second diffractive optical element 230, and the waveguide display apparatus corresponding to the curvature of the previously installed curved surface reflector may be arbitrarily installed.

The direction in which the reflected diffracted lights travel can be governed by the curvature of each point (of the curved surface reflector) at which each diffracted light is reflected. In this regard, since the waveguide display apparatus 200 according to the present disclosure is a device for correcting curved surface reflection distortion, the diffracted lights reflected from each point of the curved surface reflector should travel in directions parallel to each other.

To this end, the second diffractive optical element 230 may have a diffraction grating structure corresponding to the curvature of the curved surface reflector. Here, the structure of the diffraction grating corresponding to the curvature of the curved surface reflector may refer to one or more of a pitch of the diffraction grating and a slanted angle of the diffraction grating that cause the diffracted lights reflected from the curved surface reflector to travel in directions parallel to each other. As a result, the second diffractive optical element 230 may have a different diffraction grating structure for each of locations at which the diffracted lights are emitted, and the different diffraction grating structure may be a structure corresponding to the curvature of the curved surface reflector.

The conventional waveguide display described with reference to FIGS. 1a and 1b is configured such that the incidence angle of the diffraction optical element 1 corresponds to the emitting angle of the diffraction optical element 2, and the emitting angle of the diffraction optical element 1 corresponds to the incidence angle of the diffraction optical element 2. In contrast, the waveguide display apparatus 200 according to the present disclosure is configured such that the diffracted lights outputted from the second diffractive optical element 230 are diffracted at different angles for each location based on the curvature of the curved surface reflector, and the different angles correspond to angles at which the diffracted lights reflected from the curved surface reflector travel in directions parallel to each other.

For example, as shown in FIG. 2, the diffracted lights emitted from various locations of the second diffractive optical element 230 may have each different emitting angles, and the second diffractive optical element 230 may have a diffraction grating structure such that the diffracted lights have each different emitting angles.

Due to these structural features, the waveguide display apparatus 200 according to the present disclosure can correct curved surface reflection distortion, thereby providing a clearer image.

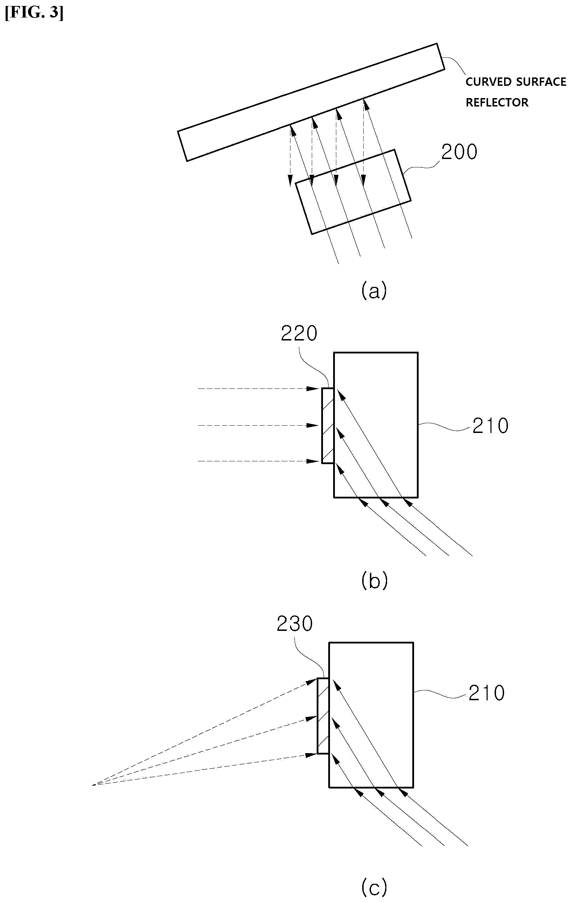

FIG. 3 is a diagram for explaining examples of a recording method of a diffraction grating of the diffraction optical elements 220 and 230 according to the present disclosure. In FIG. 3, description will be made focusing on an example in which the diffractive optical elements 220 and 230 are implemented as holographic optical elements.

In order to correct the curved surface reflection distortion (in order for the reflected diffracted lights to travel in directions parallel to each other), the height of each of the locations where each of the diffracted lights outputted from the second diffractive optical element 230 is reflected by the curved surface reflector must be constant.

As shown in FIG. 3(a), 'the height of each of the reflection locations is constant' may mean that the relative height of each of the reflection locations with respect to the waveguide display apparatus 200 is constant. In order to make the height of each of the locations at which each of the diffracted lights is reflected from the curved surface reflector constant, a process of rotating the waveguide display apparatus 200 to be horizontal with the curved surface reflector may be performed.

As shown in FIG. 3(b), a process of forming, on the first diffractive optical element 220, a diffraction grating structure capable of diffracting an input image into the inside of the waveguide 210 by irradiating a recording beam to the first diffractive optical element 220 may be performed.

Additionally, as shown in FIG. 3(c), a process of forming, on the second diffractive optical element 230, a diffraction grating structure capable of diffracting the diffracted lights guided by the waveguide 210 to the outside (toward the direction of the curved surface reflector) by irradiating the recording beam to the second diffractive optical element 230 may be performed.

Since the second diffractive optical element 230 must have a diffraction grating structure that allows the diffracted lights reflected from the curved surface reflector to travel in directions parallel to each other, the recording beam for generating the diffraction grating structure of the second diffractive optical element 230 may be irradiated at a emitting angle corresponding to the curvature of the curved surface reflector.

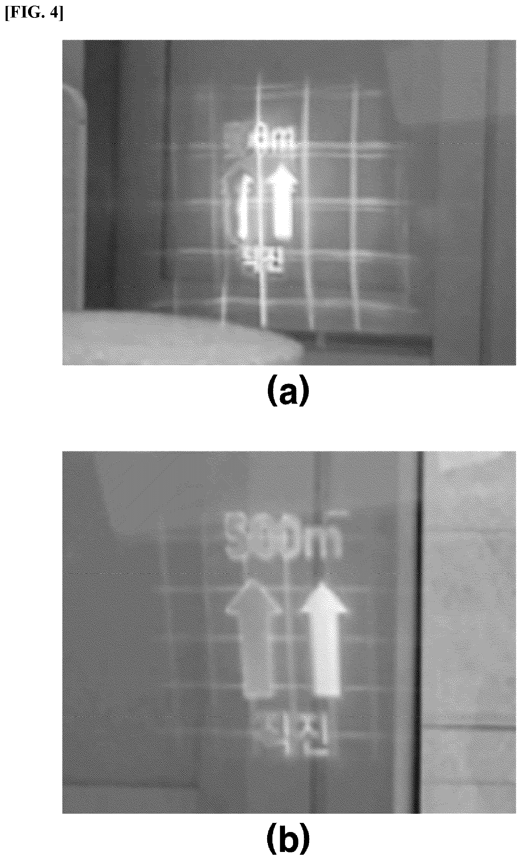

FIG. 4 shows diagrams for explaining and comparing the sharpnesses of images between the conventional waveguide display and the waveguide display apparatus 200 according to the present disclosure.

FIG. 4(a) shows an image which has been photographed while causing the diffracted light outputted from a conventional waveguide display to be reflected on a curved surface reflector. As shown in FIG. 4(a), the curved surface reflection distortion is not corrected in the conventional waveguide display, so problems such as image distortion, double image occurrence, and the like arises during binocular observation.

FIG. 4(b) shows an image which has been photographed while causing the diffracted light outputted from a waveguide display apparatus 200 according to the present disclosure to be reflected on a curved surface reflector. As shown in FIG 4(b), the waveguide display apparatus 200 according to the present disclosure corrects the curved surface reflection distortion, so there is neither image distortion nor double image problem, and as a result, a clearer image can be provided compared to the conventional waveguide display.

In the above, the present disclosure has been described in detail with reference to various embodiments. However, embodiments according to the present disclosure may be modified in other various forms. That is, the embodiments of the present specification are provided to more completely explain the present disclosure to those of ordinary skill in the art to which the present disclosure belongs.

The present disclosure is not limited to the embodiments described herein, and various modifications can be made by those skilled in the art to which the present disclosure belongs within the equivalent scope of the technical idea of the present disclosure and the claims to be provided below.

## Claims

1. A waveguide display apparatus for correcting curved surface reflection distortion, the waveguide display apparatus comprising:
a waveguide for guiding light inputted from the outside;
a first diffractive optical element disposed at the waveguide, and diffracting the light inputted from the outside to the inside of the waveguide; and
a second diffractive optical element disposed at the waveguide, and diffracting the light guided by the waveguide to output a plurality of diffracted lights toward a direction of a curved surface reflector located outside,
wherein the second diffractive optical element has a structure of a diffraction grating corresponding to a curvature of the curved surface reflector such that the plurality of diffracted lights are reflected at different locations of the curved surface reflector in directions parallel to each other.

2. The waveguide display apparatus of claim 1, wherein the structure of the diffraction grating includes one or more of a pitch of the diffraction grating and a slanted angle of the diffraction grating.

3. The waveguide display apparatus of claim 1, wherein the first diffractive optical element and the second diffractive optical element are holographic optical elements.

4. The waveguide display apparatus of claim 1, wherein the waveguide is formed of a flat plate.

5. The waveguide display apparatus of claim 1, wherein the curved surface reflector is spaced apart from the waveguide and located outside.
